# EUROPEAN PATENT APPLICATION

(11) **EP 2 728 482 A1**
(43) Date of publication of application: **07.05.2014**
(21) Application number: 13191411.1
(22) Date of filing: 04.11.2013
(51) Int. Cl.: G06F 11/34

(54) **Method and arrangement for collecting timing data related to a computer application**

(30) Priority: 05.11.2012 NL 2009756
(71) Applicant: Realworld Holding B.V., 4105 JH Culemborg (NL)
(72) Inventor: Arghirescu, Dan, 031166 BUCHAREST (RO)
(74) Representative: Algemeen Octrooi- en Merkenbureau B.V.

(57) **Abstract**

In a computer, a method of collecting timing data related to a compute application is provided. The method comprises receiving user input from a user, the user input triggering providing at least one instruction to the computer application for execution of an operation and executing the operation. The results out of execution of the operation are presented to the user. The method further comprises generating a timing data record comprising data for determining the amount of time lapsed between start of the execution of the instruction and end of the execution of the instruction. By generating the timing data in the computer, the data for generating the timing data record is already available in the device can be directly used and stored. In this way, accurate timing data may be collected for further use.

## Description

### TECHNICAL FIELD

The various aspects disclosed related to collecting information on behaviour of a computer application while used by a user of the application.

### BACKGROUND

Information on how a user uses a computer application and behaviour of the computer application in response to user input is important information. This information is important to software developers, but also to IT support departments. For the latter, such information is important to find points for improvement of the computer application and/or hardware used. And it is also important to verify complaints from users. Users provide with complaints relatively subjective feedback, whereas actually collected information provides more objective feedback.

### SUMMARY

It is preferred to obtain information on how a user uses a computer application and behaviour of the computer application in response to user input at a point close to the computer application.

A first aspect provides in a computer, a method of collecting timing data related to a compute application. The method comprises receiving user input from a user, the user input triggering providing at least one instruction to the computer application for execution of an operation and executing the operation. The results out of execution of the operation are presented to the user. The method further comprises generating a timing data record comprising data for determining the amount of time lapsed between start of the execution of the instruction and end of the execution of the instruction.

By generating the timing data in the computer, the data for generating the timing data record is already available in the device can be directly used and stored. In this way, accurate timing data may be collected for further use.

In an embodiment, the computer is arranged for being operationally connected to a data analysis server. In this embodiment, the method further comprises storing the timing data record in a buffer memory comprised by the computer. User activity on the computer is monitored and the buffered timing data record is sent to the data analysis server if no user activity on the computer is detected for a pre-determined amount of time.

In this embodiment, the timing data is sent if there is no user activity on the computer. An advantage of this is that sending the buffered timing data record to another server does not interfere with performance to be measured.

In a further embodiment, the buffer memory has a pre-determined size for storing a maximum amount of data. In this embodiment, the method further comprises determining whether storing the timing data record generated in the buffer memory causes a buffer overflow. If storing the timing data record generated in the buffer memory causes a buffer overflow, at least one older timing data record by the timing data record generated is deleted.

This allows always the most recent data to be stored in the buffer memory.

Another embodiment comprises generating a summary timing data record comprising data comprised by the older timing data record in summarised form.

In this way, at least some information related to the data deleted is secured for later use. This means that still a long term development of certain timing parameters can be determined.

In yet a further embodiment, generating a timing data record comprising data for determining the amount of time lapsed comprises obtaining a first timestamp at the start of the execution of the instruction and obtaining a second timestamp at the end of the execution of the instruction. The first timestamp and the second time stamp being are provided in the timing data record.

In this embodiment, the actual start time of the execution of an operation is recorded and with further information recorded, also the time elapsed can be determined. In this way, data usable for multiple purposes is stored efficiently.

A second aspect provides a device for collecting timing data related to a computer application. The device comprises a user input receiving module connectable to a user input device for receiving a user input and for passing on said user input to other components of the device and a processing unit. The processing unit is arranged to execute an operation following an instruction provided by the computer application upon receiving the user input generate a timing data record comprising data for determining the amount of time elapsed between start of the execution of the instruction and end of the execution of the instruction.

A third aspect provides a computer programme product stored on a computer readable medium, comprising computer programme code arranged to perform the method according to the first aspect when running on a computer.

### BRIEF DESCRIPTION OF THE DRAWINGS

The various aspects and embodiments will now be discussed in further detail in conjunction with Figures. In the Figures:
- Figure 1:: shows a user experience analysis system;
- Figure 2:: shows a workstation;
- Figure 3:: shows a data storage server
- Figure 4:: shows a user experience analysis server; and
- Figure 5:: shows a flowchart depicting a procedure.

### DETAILED DESCRIPTION

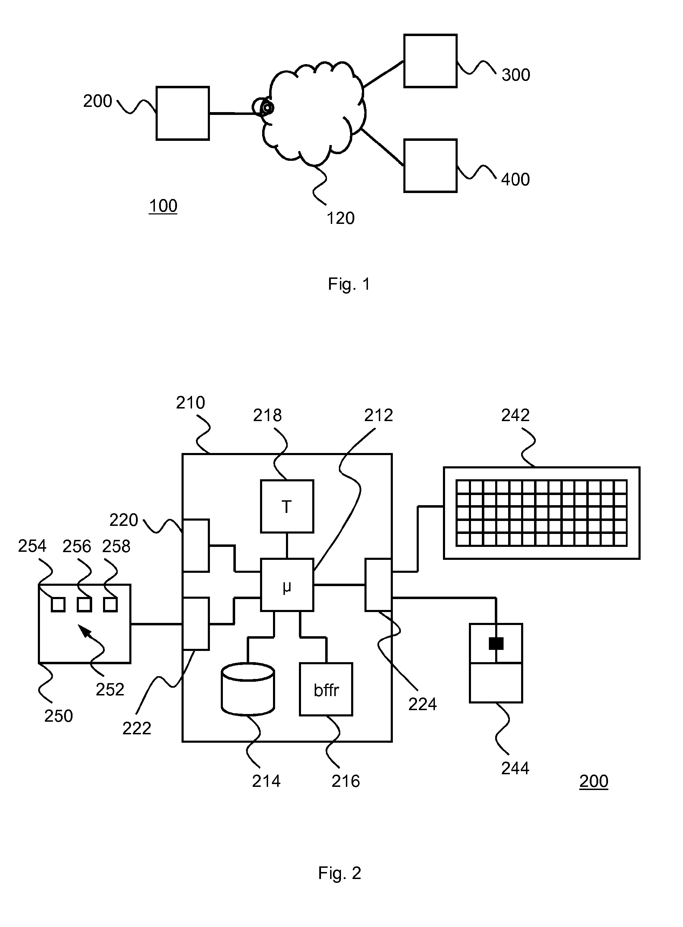

Figure 1 shows a user experience analysis system 100. The user experience analysis system comprises a workstation 200 as a user terminal, a data storage server 300 and a user experience analysis server 400. The workstation 200, the data storage server 300 and the user experience analysis server 400 are operationally coupled to one another via a communication network 120. The communication network may be any available communication network suitable to perform a communication function between the various components of the user experience analysis system. It may be wired, wireless or a combination of both. It may be a local area network, a wide area network or a combination thereof. The user experience analysis system 100 is arranged to measure parameters influencing how a user experiences a computer application to work on the workstation 200 while the computer application communicates with the data storage server 300. The user experience analysis server 400 is arranged to analyse the measures values.

Figure 2 shows the workstation 200 in further detail. The workstation 200 comprises a computer 210 connected to a screen 250, a keyboard 242 and a mouse 244. Additionally or alternatively, the computer 210 has other peripheral devices connected to it, like speakers or a touch screen. The computer 210 comprises a microprocessor 212 as a processing unit, a harddisk 214 as a storage module, a buffer memory 216, a timing module 218, a network communication module 220, a video data rendering module 222 and a user input receiving module 224. The microprocessor 212 is arranged for processing data received by means of the user input receiving module 224 or the network communication module 220 or stored on or provided by the harddisk 214, the buffer memory 216 and the timing module 218. The microprocessor 212 is also arranged to control operation of the various components of the computer 210.

The harddisk 214 is arranged for storing a computer programme product comprising computer executable code for programming the computer 210 and the microprocessor 242 in particular to perform operations as discussed in this description. The harddisk 214 is further arranged for storing any data processed by or to be processed by the microprocessor 212. Alternatively or additionally, the storage module is embodied as a non-volatile semiconductor memory or a volatile semiconductor memory.

The buffer memory 216 is preferably embodied as a non-volatile semiconductor memory, but may also be embodied as a volatile semiconductor memory or as a partition of the harddisk 214. That partition may be a fixed partition or a variable partition, with either a fixed or a variable location on the harddisk and either a fixed size or a variable size.

The timing module 218 is arranged for keeping a timing value. The timing value is a value that is increased periodically with a pre-determined amount and preferably represents the actual time at the geographical location of the workstation 210.

The network communication module 220 allows the computer 210 and components and peripherals thereof to communicate with other devices operatively connected to the computer 210 by means of the communication network 120. The user input receiving module is arranged to receive user input via the keyboard 242 and the mouse 244 and pass the user input through to other components of the computer 210. The video data rendering module 222 is arranged to receive data for visualisation and process the data receive to data format for display by the screen 250. The screen 250 displays a first selectable area 254, a second selectable area 256, a third selectable area 258 and a mouse pointer 252. The mouse pointer 252 can be moved over the screen 250 by moving the mouse 244. The movements of the mouse pointer 252 over the screen 250 by means of the mouse 244 are further controlled by the microprocessor 212.

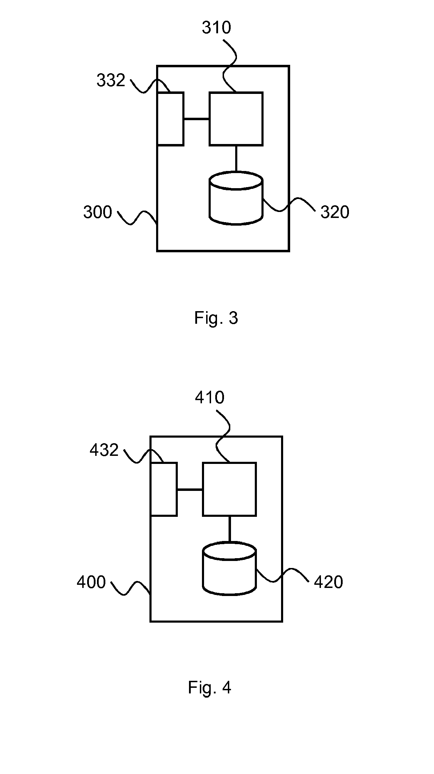

Figure 3 shows the data storage server 300 in further detail. The data storage server 300 comprises a microprocessor 310 for controlling the operation of the data storage server 300 and for processing of data received by means of a data communication module 332 or stored on a harddisk 320 as a storage module. The data storage server 300 is particularly arranged for storing large amount of data. This means that in practice, the data storage server 300 may be embodied by means of multiple computers in a data warehouse, each computer comprising one or more harddisk drives.

The data is stored on the harddisk 320 preferably in a database format, either relational or hierarchical, for retrieval by multiple other computers comprised by workstations like the workstation 200 as depicted by Figure 2. The data is, per request of the other computers received via the communication network 120, sent to the other computers via the communication network 120. The data sent may be a specific data part like a specific record in a specific database. Alternatively, the data may be a chunk of raw data, for example the actual data stored in one or more sectors of the harddisk 320.

Figure 4 shows the user experience analysis server 400 in further detail. The user experience analysis server comprises a microprocessor 410 for controlling the operation of the user experience analysis server 400 and for processing of data received by means of a network communication module 432 or stored on a harddisk 420 as a storage module. The user experience analysis server 400 is particularly arranged for processing data related to user experience of a computer application. The processing of the data related to user experience particularly relates to statistical analysis of data received from the computer 210 as will be discussed below in further detail.

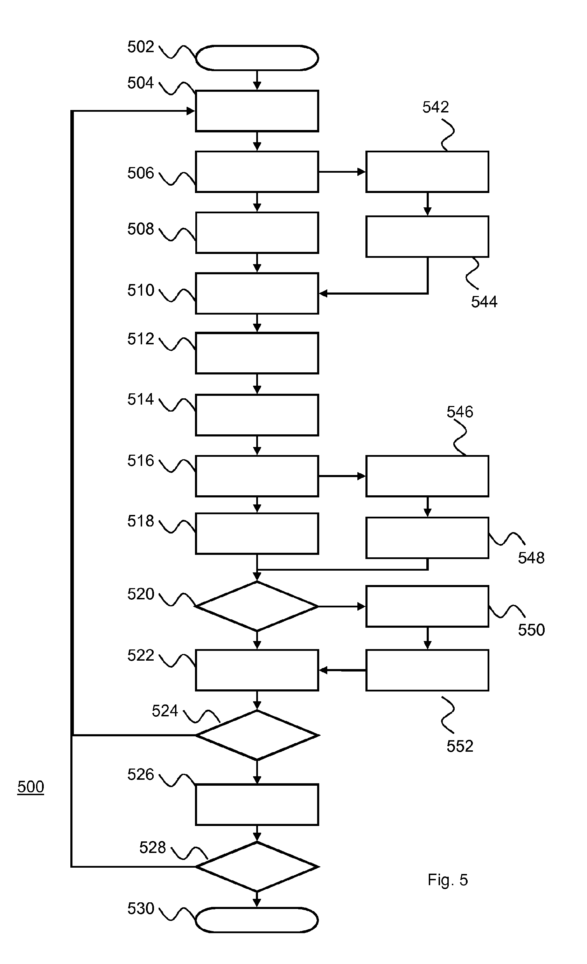

The functionality of the user experience analysis system 100 will now be discussed in conjunction with a flow chart 500 depicted by Figure 5. The table below provides a summary of each step of the flowchart 500. The steps will be described in further detail below the table.

| Ref. no. | Step |
|---|---|
| 502 | Start procedure |
| 504 | Receive user input |
| 506 | Look up instruction |
| 508 | Instruct retrieval of data |
| 510 | Receive raw data |
| 512 | Retrieve specific data from raw data |
| 514 | Process specific data |
| 516 | Render processed data |
| 518 | Display data |
| 520 | Buffer full? |
| 522 | Store timing record in buffer |
| 524 | User inactive for longer time? |
| 526 | Send timing records |
| 528 | Application terminated? |
| 530 | End procedure |
| 542 | Set timestamp |
| 544 | Store timestamp in time record |
| 546 | Set timestamp |
| 548 | Store timestamp in time record |
| 550 | Summarise existing timing data |
| 552 | Overwrite existing timing data |

The process starts in a terminator 502. In a step 504, the computer 210 receives user input provided by means of the keyboard 242, the mouse 244 or another peripheral input device. The user input is received by the microprocessor 212 via the input receiving module 224. In step 506, the microprocessor 212 looks up an instruction associated with the user input received. The instruction is defined by a computer application running on the microprocessor 212. The user input may be a string provided by means of the keyboard 242. Alternatively or additionally, the user input may be a click of the mouse 244. In the latter case, the location of the mouse pointer 252 is checked with the locations of the first selectable area 254, the second selectable area 256 and the third selectable area 258. Each of the selectable areas has an instruction associated with it. The instruction associated with the selectable area with the mouse pointer 252 located on it is selected.

In a preferred embodiment, the selected instruction is an instruction for retrieval of data for processing by the computer 210 and the microprocessor 212 on which the application runs in particular. The instruction for retrieval of data is executed in step 508. The instruction is sent via the network communication module 220 to the data storage server 300 via the communication network 120. In the data storage server 300, the instruction for data retrieval is received by the microprocessor 310 via the data communication module 332. Upon retrieving the instruction, the microprocessor looks up sectors on the harddisk 320 where the requested data is located. The raw data stored in these sectors is retrieved in total by the microprocessor 310 and sent to the computer 210 via the data communication module 332. Alternatively, the data specifically requested is retrieved from the raw data in the identified sectors and only the data specifically requested is sent to the computer 210. An advantage of directly sending the raw data is that processing load of the microprocessor 310 of the data storage server 300 is kept to a lower level.

Upon executing the instruction - sending the data query - a first timestamp is created in step 542. The first timestamp is created by copying the value of the timing module 218. In step 544, the value taken is stored by the microprocessor 212 in a timing data record. The timing data record may be stored in the harddisk 214 or the buffer memory 216.

The raw data sent by the data storage server 300 is received by the computer 210 in step 510 and by the microprocessor 212 in particular, via the network communication module 220. In step 512, data specifically requested is retrieved from the raw data received in the step 510. It may be that the data requested is stored on the harddisk 320 of the data storage server 300 in two sectors of significant size. This may be the case if the database is stored as one file over multiple sectors, causing a record to be split over two sectors. In the step 512, the record is retrieved from two parts of sector data and reconstructed as one data record. Raw data received in step 510 not related to the data query is discarded in step 512.

In step 514, the data distilled from the raw data may be processed by the microprocessor 212 in case required. Such processing may involve arithmetic operations like adding and multiplying, merging a record with other information, comparing, other, or a combination thereof. The results of the processing are subsequently rendered by video data rendering module 222 in step 516 for display of the processed data. Alternatively, the specifically requested data is obtained directly from the data storage server 300 and rendered without requiring processing. In such scenario, the data distillation step 514 and the processing step 516 may be omitted. Alternatively, only either one of these step may be omitted in case not required.

Upon finalisation of the rendering step, the rendered data is provided to the screen 250 for display to the user in step 518. In parallel, a second timestamp is generated in step 546 and stored in the timing record in step 548. In addition to the generation of the first timestamp and the second timestamp, also further timestamps may be generated at intermediate points of the process for later analysis. For example, further timestaps may be generated at the moment a data request is sent out, at the moment data is or has been received from the data storage server 300, at the moment data received has been processed by the microprocessor 212, the the moment the processed data has been rendered, or at a multitude of two or more of these moment.

Also the further timestamps are stored in the timing data record. The timing data record may be complemented by further information, like a user identifier identifying the user, a computer identifier identifying the computer, a input identifier identifying the user input, an instruction identifier identifying the instruction, an operation identifier identifying the operation, a computer application running on the computer, other or a combination thereof.

As an alternative to generating timestamps, a clock may be started on start of an event like the execution of an operation. The clock is stopped at the moment the operation is finalised, yielding the time the operation required for execution. Alternatively or additionally, the same clock or other clocks may be used to determine the time required for multiple subsequent operations to execute, like the retrieval of data, followed by extraction of specific data from raw data received. In this embodiment, no timestamps but actual time elapsed is stored in the timing data records. An advantage is that less storage space may be required. A disadvantage is that in this way, the actual time of the execution of the operation is lost. This can be resolved by storing the start time, but this reduces or even eliminates the advantage of less storage space.

Subsequently, the buffer memory 216 is checked in step 520 for free capacity for storing the timing data record. If the buffer memory 216 has enough free space available for storing the timing data record, the timing data record generated is stored in the buffer memory 216 in step 522. If the buffer memory 216 does not hold enough data for storing the timing data record, the process branches from step 520 to step 550 to summarise data held by multiple earlier timing data records already stored in the buffer memory 216.

Summarising data held by multiple earlier timing data records may comprising taking average and/or median values of time elapsed between receiving user input and rendering the data. Additionally or alternatively, taking such values between other steps depicted by the flowchart 500 or yet other steps may be taken. Additionally or alternatively, other values may be calculated, like standard deviation or other statistical parameters. These statistical parameters may be further be used for data analysis, like removing values from a dataset that have a difference from the median or average value larger than a pre-determined value, like a certain multiple of the standard deviation.

Summarised values may be taken per user, per computer application or other parameters as discussed above of which identifiers available in the timing data record. The summarised data is stored in one or more summary timing data records, for example with one summary timing data record per identifier. Additionally, further information may be generated on the earlier timing data record of which the data has been summarised, like the time span in which the earlier timing data records have been generated.

The one or more summary timing data records are stored in the buffer memory 216 in step 552, directly overwriting one or more earlier timing data records. Alternatively, the earlier timing data records are first deleted, either in total or in part, followed by writing the one or more summary timing data records to the buffer memory 216. So earlier data may be overwritten directly or in two steps by first deleting earlier data an subsequently using the freed space. Subsequently, the timing data record generated is stored in step 522.

Having stored the timing data record, the process proceeds with step 524, in which the microprocessor 212 checks whether the computer 210 is inactive for a pre-determined amount of time. This is in this particular embodiment checked by monitoring user input at user input receiving module 224. If activity is detected within the pre-determined amount of time, the process returns to step 504 with reception of user input. It may also be that user input has been detected before all activities discussed above have been finalised. Also in that case, the process proceeds from step 524 to step 504.

If no activity has been detected for the pre-determined amount of time, in particular after the timing data record has been finalised, all timing data records stored in the buffer memory 216 are sent to the user experience analysis server 400 in step 526. This activity is facilitated by the network communication module 220 that is through the communication network 120 operatively connected to the network communication module 432 of the user experience analysis server 400. In the user experience analysis server 400, the timing data records received are stored on the harddisk 420 under control of the microprocessor 410.

The timing data stored on the harddisk 420 is used for further statistical analysis for monitoring and analysing the performance of the workstation 200. With information gathered, the performance of the workstation 200 itself may be evaluated, as well as the performance of the workstation 200 in conjunction with the communication network 120, the data storage server 300 and/or specific applications running on the workstation 200. Data that may further be extracted from data gathered by the user experience analysis server 400 is what application has been used most over a certain period of time, what applications generate the longest waiting times for data retrieval, which tables of databases are queried and/or retrieved most and other. Also statistics per user may be generated. This is particularly advantageous for verification of user complaints on slow performance of the experience analysis system 100 and/or components thereof.

Subsequently, it is checked in step 528 whether the application is terminated or still running. If the application is still running, the process branches back to step 504 for receiving user input. If the application has been terminated, the process also terminates in a terminator 530.

The software routines for obtaining timing information and storing such information in the buffer memory 216 may be embedded in the application, the operation of which is monitored. Alternatively, the application is provided with an interface to operate with a separate application for obtaining timing information and storing such information in the buffer memory 216 - and sending that information to the user experience analysis server 400. Such interface is provided in the application as a hook, which may in practice be implemented in several ways for connecting to the functionality of software routines for obtaining timing information and storing such information in the buffer memory 216.

## Claims

1. In a computer, a method of collecting timing data related to a computer application, the method comprising:
- Receiving user input from a user, the user input triggering providing at least one instruction to the computer application for execution of an operation;
- Executing the operation;
- Presenting results resulting out of execution of the operation to the user; and
- Generating a timing data record comprising data for determining the amount of time lapsed between start of the execution of the instruction and end of the execution of the instruction.

2. Method according to claim 1, wherein the computer is arranged for being operationally connected to a data analysis server, the method further comprising:
- Storing the timing data record in a buffer memory comprised by the computer;
- Monitoring user activity on the computer; and
- Sending the buffered timing data record to the data analysis server if no user activity on the computer is detected for a pre-determined amount of time.

3. Method according to claim 2, wherein the buffer memory has a pre-determined size for storing a maximum amount of data, the method further comprising:
- Determining whether storing the timing data record generated in the buffer memory causes a buffer overflow;
- Delete at least one older timing data record by the timing data record generated if storing the timing data record generated in the buffer memory causes a buffer overflow.

4. Method according to claim 3, wherein deleting the older timing data record is effectuated by overwriting the older timing data record by the timing data record.

5. Method according to claim 3 or 4, further comprising generating a summary timing data record comprising data comprised by the older timing data record in summarised form.

6. Method according to claim 5, wherein generating the summary timing data record comprises, based on data held by the older timing data records, determining per record amounts of time lapsed between start of the execution of the instruction and end of the execution of the instruction and determining at least one of the average, standard deviation, and/or median of the set of amounts of time lapsed and storing said value in a summary timing record.

7. Method according to claim 6, wherein generating the summary timing data record comprises, based on data held by the older timing data records, determining per record amounts of time lapsed between start of the execution of the instruction and end of the execution of the instruction and determining timing data records comprising data indicating a time period lapsed between start of the instruction and end of the execution of the instruction which time period differs from the average time period with a pre-determined value and storing said value in a summary timing record.

8. Method according to any of the preceding claims, wherein user input triggers execution of at least the following operations:
- Sending a data request to a data storage server;
- Receiving data from the data storage server;
- Processing the received data; and
- Rendering the processed data for presentation on a display;
The method further comprising generating a timing data record comprising data for determining the amount of time lapsed between at least one of the following operations or events:
- Receiving user input from the user and rendering the processed data for presentation on a display;
- Sending a data request to a data storage server and receiving data from the data storage server;
- Sending a data request to a data storage server and processing the received data; and
- Receiving data from the data storage server; and rendering the processed data for presentation on a display.

9. Method according to any of the preceding claims, wherein generating a timing data record comprising data for determining the amount of time lapsed comprises:
- Obtaining a first timestamp at the start of the execution of the instruction;
- Obtaining a second timestamp at the end of the execution of the instruction; and
- Providing the first timestamp and the second time stamp in the timing data record.

10. Method according to any of the preceding claims, wherein generating the timing data record further comprises adding to the timing data record at least one of the following data items:
- A user identifier identifying the user;
- A computer identifier identifying the computer;
- An input identifier identifying the user input;
- An instruction identifier identifying the instruction;
- An operation identifier identifying the operation; and
- A computer application running on the computer.

11. Device for collecting timing data related to a computer application, comprising:
- A user input receiving module connectable to a user input device for receiving a user input and for passing on said user input to other components of the device;
- A processing unit arranged to:
- execute an operation following an instruction provided by the computer application upon receiving the user input; and
- Generate a timing data record comprising data for determining the amount of time elapsed between start of the execution of the instruction and end of the execution of the instruction.

12. Computer programme product stored on a computer readable medium, comprising computer programme code arranged to perform the method of any of the claims 1 to 10 when running on a computer.
